**Europäisches Patentamt**

(19) **European Patent Office**

**Office européen des brevets**

(11) Veröffentlichungsnummer: **0 016 337**
**B1**

(12) **EUROPÄISCHE PATENTSCHRIFT**

(45) Veröffentlichungstag der Patentschrift:
31.07.85

(51) Int. Cl.⁴: **F 24 J 2/00**, E 04 B 1/74

(21) Anmeldenummer: 80100772.5

(22) Anmeldetag: 14.02.80

(54) Anordnung bzw. Verfahren zur Klimatisierung eines Gebäudes.

(30) Priorität: 15.02.79 AT 1192/79

(43) Veröffentlichungstag der Anmeldung:
01.10.80 Patentblatt 80/20

(45) Bekanntmachung des Hinweises auf die Patenterteilung:
31.07.85 Patentblatt 85/31

(84) Benannte Vertragsstaaten:
CH GB IT

(56) Entgegenhaltungen:
DE - A - 2 547 214
DE - A - 2 629 086
DE - A - 2 649 807
US - A - 4 119 083
US - A - 4 135 489
US - A - 4 143 815

(73) Patentinhaber: Haugeneder, Hans, Ing., Unterer Markt 8,
A-3335 Weyer (AT)
Patentinhaber: Panzhauser, Erich, Prof. Dr.,
Gentzgasse 129, A-1180 Wien (AT)

(72) Erfinder: Haugeneder, Hans, Ing., Unterer Markt 8,
A-3335 Weyer (AT)
Erfinder: Panzhauser, Erich, Prof. Dr., Gentzgasse 129,
A-1180 Wien (AT)

(74) Vertreter: Reinhard, Skuhra, Weise, Leopoldstrasse 51,
D-8000 München 40 (DE)

## Beschreibung

Die Erfindung betrifft eine Anordnung bzw. ein Verfahren zur Klimatisierung eines Gebäudes gemäß dem Oberbegriff des Patentanspruchs 1.

Eine Anordnung zur Klimatisierung eines Gebäudes der eingangs genannten Art ist aus der DE-A-2 547 214 bekannt, bei welcher vorbestimmte Strömungskanäle zur Luftführung ausgebildet sind. Außerdem hat bei dieser Anordnung die wärmeabsorbierende Schicht keine Wärmetauscherfunktion. Die Luft wird durch Kanäle geleitet, die an und entlang der Außenseite eines Gebäudes durch eine für Wärmestrahlen durchlässige Reflexionsschicht gebildet sind.

Der Erfindung liegt die Aufgabe zugrunde, eine Anordnung der eingangs genannten Art zu schaffen, die auf einfache Weise sowohl einen Heizbetrieb als auch einen Kühlbetrieb bei Ausnutzung der bautechnischen Gegebenheiten ermöglicht.

Diese Aufgabe wird erfindungsgemäß durch den kennzeichnenden Teil der Patentansprüche 1 und 12 gelöst.

Weitere Ausgestaltungen der Anordnung ergeben sich aus den abhängigen Ansprüchen.

Die Anordnung ermöglicht auf einfache Weise einen Heiz- oder Kühlbetrieb, wobei von der einen auf die andere Betriebsart übergegangen werden kann. Der vergleichbar einfache Aufbau ergibt sich dadurch, daß die wärmeabsorbierende Schicht eine von Luft durchströmbare Schicht ist und sich somit der Einsatz bzw. die Konstruktion von Strömungskanälen erübrigt. Die wärmeabsorbierende Schicht bildet vorteilhafterweise zugleich die Wandung eines Gebäudes, der eine transparente oder opake Hülle vorgesetzt ist.

Die Luftzuführung läßt sich lastabhängig und in der Richtung wechselnd einstellen; insbesondere ist die Luftströmung zum jeweiligen Wärmeleitungsstrom entgegengesetzt gerichtet und verläuft parallel zum Wärmeleitungsstrom. Dieses Prinzip der Führung der Luftströmung wird als »Gegenstrom« bezeichnet.

Im folgenden werden Ausführungsformen der Anordnung anhand der Zeichnung sowie eine bevorzugte Ausführungsform eines Verfahrens zur Klimatisierung eines Gebäudeinnenraums erläutert. Es zeigt

Fig. 1 eine Prinzipdarstellung zur Erläuterung der Unterschiede zwischen einer konventionellen und der erfindungsgemäßen Anordnung zur Klimatisierung eines Gebäudes, wobei lediglich die Bauwerkshülle dargestellt ist,

Fig. 2 eine bevorzugte Ausführungsform der erfindungsgemäßen Bauwerkshülle,

Fig. 3 bis 6 Darstellungen der Luftströmung bei unterschiedlichen Strahlungsbedingungen,

Fig. 7a bis 7d verschiedene Ausführungsformen der Bauwerkshüllen mit jeweils einer Wärmespeicherschicht,

Fig. 8a und 8b zwei Ausführungsformen einer Bauwerkshülle mit Strahlungsheizung,

Fig. 9a und 9b Darstellungen zur Erläuterung der Anordnung der Speicherschichten, und

Fig. 10 eine Darstellung eines Gebäudes mit der erfindungsgemäßen Bauwerkshülle.

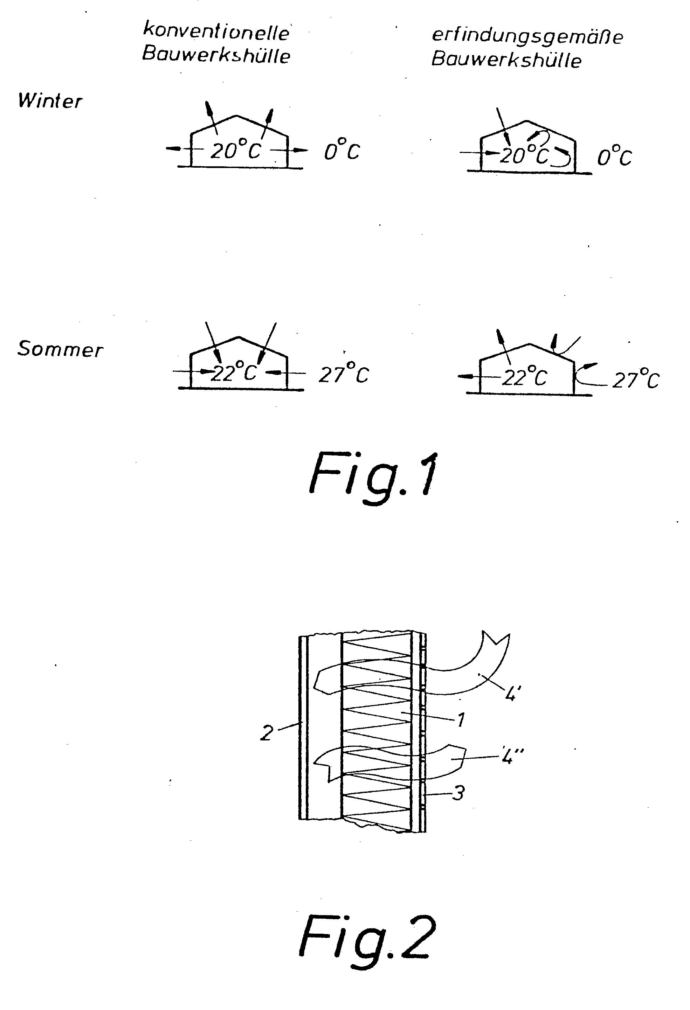

In Fig. 1 ist der Unterschied zwischen einer konventionellen Bauwerkshülle und der erfindungsgemäßen Bauwerkshülle dargestellt, und zwar für die Jahreszeiten Winter und Sommer.

Während bei der konventionellen Gebäudehülle im Winter der Wärmestrom von innen nach außen geht, was einem Wärmeverlust entspricht, ist erfindungsgemäß ein Wärmestrom von außen nach innen oder ein Wärmestrom = 0 zu verzeichnen, was bedeutet, daß ein Wärmegewinn erreicht wird oder zumindest Wärmeverluste verhindert werden. Im Sommer ist bei der konventionellen Bauwerkshülle ein Wärmestrom von außen nach innen zu verzeichnen, was gleichbedeutend ist mit einer Überwärmungsgefahr, während bei der erfindungsgemäßen Bauwerkshülle ein Wärmestrom von innen nach außen oder ein Wärmestrom = 0 vorliegt, was bedeutet, daß eine Kühlung erreicht wird oder zumindest die Überwärmungsgefahr verhindert wird. Bei den Darstellungen wird davon ausgegangen, daß im Winter eine Außentemperatur von durchschnittlich 0°C bei Innentemperaturen von 20°C und im Sommer eine Außentemperatur von durchschnittlich 27°C bei einer Innentemperatur von 22°C vorliegt.

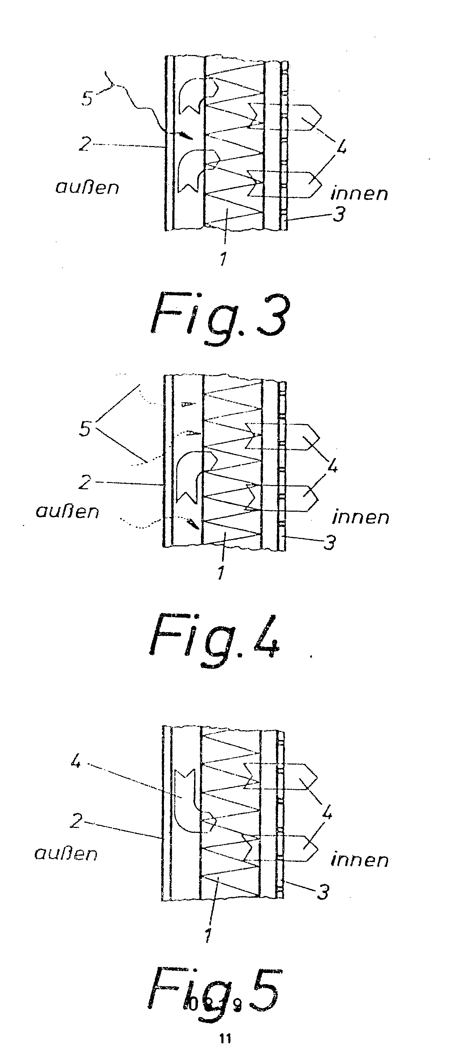

Wie aus der folgenden Beschreibung noch hervorgeht, kann die erfindungsgemäße Bauwerkshülle auch als integriertes Kollektorsystem bezeichnet werden. Aus Fig. 2 ist ersichtlich, daß der gesamte Wärmeleistungsbedarf erfindungsgemäß auf die Erwärmung der Frischluft reduziert wird.

Fig. 2 zeigt den Aufbau einer erfindungsgemäßen Bauwerkshülle, die sich insbesondere für ein integriertes Großflächenwärmeübertragungssystem eignet. Die Bauwerkshülle ist als Luft-Umgebungswärme-Kollektor ausgebildet. Die Bauwerkshülle besteht aus einer Absorber- und Wärmetauscherschicht 1 (die im folgenden nur als Absorberschicht 1 bezeichnet wird) und einer transparenten oder opaken Außenhülle 2. Vorzugsweise kann auch eine luftdurchlässige Innenverkleidung 3 vorgesehen sein. Die Außenhülle 2 weist Abstand zu der Absorberschicht 1 auf. Auch die vorzugsweise vorzusehende luftdurchlässige Innenverkleidung 3 ist in Abstand zur Absorberschicht 1 vorgesehen.

Aus Fig. 2 ist die grundsätzliche Strömungsrichtung des Wärmeträgers, beispielsweise in Form von Luft, im Heizungsfall sowie im Kühlungsfall dargestellt. Die Bauwerkshülle in Form des Luft-Umgebungswärme-Kollektors ist derart ausgebildet, daß die Absorberschicht 1 in zwei Richtungen durchströmt werden kann und die jeweilige Wärmedurchlaßrichtung der Absorberschicht 1 durch die Strömungsrichtung im offenen Kollektorkreislauf bestimmt wird.

Aus Fig. 2 ist ersichtlich, daß die Außenhülle 2 zur Außenseite gewandt ist, während die luftdurchlässige Innenverkleidung 3 bzw. die Absorberschicht 1 auf die Innenseite gerichtet sind. Im Kühlungsfall strömt die Luft von innen nach außen, wie durch den Pfeil 4' gezeigt ist, während im Heizungsfall die Strömungsrichtung von außen nach innen ist, wie durch den Pfeil 4" dargestellt ist.

Während der Heizperiode wird somit der Wärmestrom gegen das Temperaturgefälle zwischen Außen- und Innenraum durch die Strömungsrichtung des Wärmeträgers Luft von außen nach innen gerichtet. Dadurch wird erreicht, daß

die an der besonnten (oder durch die Himmelsstrahlung beaufschlagten) Außenseite absorbierte Wärme ins Rauminnere geführt wird,

die in die beschatteten Bauteile aus dem Innenraum einströmende Transmissionswärme durch den entgegengerichteten Luftstrom (Wärmeträger) wieder in den Innenraum zurücktransportiert wird, und auch kein Wasserdampf (durch Diffusion) aus dem Innenraum in kühlere Wandschichten gelangen und dort kondensieren kann.

Während der Sommerperiode oder bei zeitweiser Überwärmung des Innenraumes, auch während besonders sonniger Wintertage, wird der Wärmestrom durch Umkehrung der Luftströmung durch die luftdurchlässige Absorberschicht der Bauwerkshülle von innen nach außen geleitet, was im Gegensatz zu konventionellen Bauwerkshüllen steht, bei welchen die Luftströmung von außen nach innen geführt wird.

Die Fig. 3 bis 6 machen deutlich, wie der durch die Luftströmung erzwungene Wärmefluß in den Raum umschließenden Bauteilen verläuft.

In Fig. 3 ist der Wärmefluß durch ein von Sonnenstrahlung beaufschlagtes Bauteil der Bauwerkshülle dargestellt, deren äußere Abdeckung transparent oder semitransparent ist. Die in der Absorberschicht 1 durch Energieumwandlung freigesetzte Wärme wird durch den Luftstrom in das Innere des Gebäudes geführt, solange diese Wärme zur Erreichung oder Aufrechterhaltung der Innen-Vorzugstemperaturen erforderlich ist. Wenn eine Überwärmung droht, wird die Luftströmungsrichtung umgekehrt. Damit wird dem Innenraum kühle Außenluft zugeführt, und die durch die Absorberschicht abströmende Luft verhindert eine weitere, unerwünschte Wärmezufuhr. Diese einfache Regelung ermöglicht die dauernde Einhaltung der thermischen Vorzugsbedingungen im Innenraum des Gebäudes. Der mit 5 bezeichnete Pfeil repräsentiert die direkte Sonnenstrahlung, während die Pfeile 4 den Strömungsfluß des Wärmeträgers anzeigen. Der in Fig. 3 gezeigte Zustand veranschaulicht den Strömungsfluß im Winter bei direkter Sonnenstrahlung.

Fig. 4 veranschaulicht den Strömungsfluß im Winter bei diffuser Himmelsstrahlung, wobei die diffuse Himmelsstrahlung durch einen Pfeil 5' angedeutet ist. Mit den Pfeilen 4 ist wiederum der Luftstromverlauf angedeutet. Der Aufbau des in Fig. 3 und 4 gezeigten Teiles der Bauwerkshülle entspricht der in Fig. 2 gezeigten Ausführungsform.

Bei dem in Fig. 4 gezeigten Zustand nimmt der Wärmegewinn durch die Zustrahlung nur sehr geringe Werte an, so daß die von außen durch das Wand- oder Deckenelement geführte Frischluft nur vorgewärmt wird. Durch die Absorberschicht 1 einströmende Luft wird, sobald sie in die durch den gegenläufigen Transmissions-Wärmestrom erwärmte innere Absorberabschnitte gelangt, die durch Transmission herangeführte Wärme durch einen Wärmetauscherprozeß aufnehmen und in den Innenraum zurücktransportieren. Der Wärmezustrom zum Innenraum des Bauwerks setzt sich in diesem Fall aus zwei Anteilen zusammen, nämlich aus dem Energieanteil aus dem diffusen Himmelslicht und aus dem Transmissionsanteil aus dem Innenraum.

Als Wärmeleistungsbedarf tritt nur die Differenz zwischen Lüftungswärmebedarf und Gewinn aus diffuser Himmelsstrahlung auf.

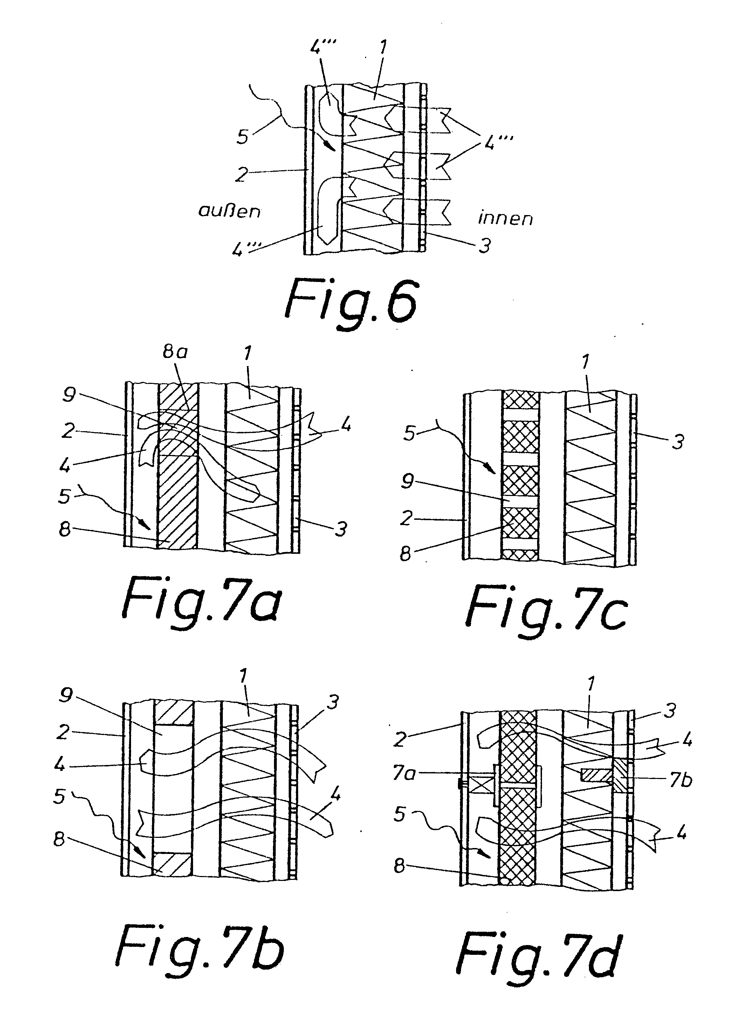

Fig. 5 ist eine den Fig. 3 und 4 entsprechende Darstellung, jedoch für den Strömungsfluß im Winter während der Nacht. Der gesamte mit der Luftströmung dem Innenraum zugeführte Wärmestrom stammt aus der Transmissionswärme aus der Absorberschicht 1, die in diesem Fall eine reine Wärmetauscherfunktion übernimmt.

Bei den in den Fig. 3 bis 5 gezeigten Situationen wird eine Luftströmung an der transparenten oder opaken Außenhülle 2 vorbei und durch die Absorberschicht 1 zum Innenraum des Bauwerks geführt. Demgegenüber veranschaulicht Fig. 6 den Fall des Strömungsflusses im Sommer bei direkter Sonneneinstrahlung, wobei die Sonneneinstrahlung durch den Pfeil 5 angedeutet ist. Die mit den Pfeilen 4'" dargestellte Luftströmung geht in diesem Fall von der Innenseite, d. h. von der vorzugsweise vorgesehenen Innenverkleidung 3 oder von der Innenfläche der Absorberschicht 1 nach außen zu der Außenhülle 2 und wird an der Außenhülle entlang geleitet. Somit entspricht Fig. 6 der Situation in der zur Sommerzeit durch direkte Sonneneinstrahlung beaufschlagten, erfindungsgemäßen Gebäudehülle. Die in der Absorberschicht 1 aus Strahlungsenergie freigesetzte Wärme wird nicht in den Innenraum geleitet, weil sonst eine viel zu hohe Überwärmung eintreten würde. Daher wird in diesem Fall die Frischluft, vorzugsweise über einen Bodenwärmetauscher, in den Innenraum geleitet und über die Absorberschicht 1 der Außenwand- und Dachfläche gegen den nunmehr nach innen gerichteten Transmissionsstrom nach außen abgeführt. Damit wird die gesamte Wärme aus der Absorberschicht ins Freie geführt, und die Wärmebelastung des Innenraumes aus der Wärmetransmission wird gleich Null.

Die in Fig. 6 dargestellte und mit den Pfeilen 4'" bezeichnete Innenluft wird, wie bereits erwähnt, durch Frischluft ersetzt, die zuvor durch einen Bodenwärmetauscher geleitet und damit abgekühlt wurde. Dies führt nicht nur dazu, daß im Sommer keine Transmissionswärmegewinne für den Innenraum auftreten, sondern auch dazu, daß der Innenraum zur Vermeidung einer Erwärmung infolge innerer Wärmequellen durch die im Bodenspeicher vorkonditionierte Zuluft gekühlt wird. Als innere Wärmequellen können beispielsweise Menschen, Beleuchtung und Unterhaltungselektronik, Kochwärme, Haushaltsgeräte usw. aufgeführt werden.

Der durch die Bauwerkshülle gebildete Luftkollektor kann abhängig von der gewünschten Eigenschaft des Bauelements, beispielsweise in Form einer Wand-, Dach- oder Bodenkonstruktion ohne oder mit einer Abdeckung nach dem Außen- oder nach dem Innenraum versehen sein, wobei die Abdeckung vorzugsweise transparenter oder opaker Natur sein kann. Dieser Luftkollektor kann auch das zur Zulufterwärmung erforderliche Wärmeverteilungssystem aufnehmen. Die Durchströmung der Bauwerkshülle mit Frischluft oder Abluft wird durch die Saug- oder Druckwirkung eines in den Zeichnungen nicht dargestellten mechanischen Lüfters bestimmt und aufrechterhalten, kann jedoch auch durch natürliche Strömungswirkung erreicht werden, beispielsweise infolge der Ausnutzung der Windkraft sowie der Thermosiphonwirkung.

Als wesentlicher Vorteil der vorstehend beschriebenen Bauwerkshülle ist anzusehen, daß der Energiebedarf des von der Bauwerkshülle umschlossenen Raumes

a) sich bei Heizbetrieb auf die zur Zulufterwärmung erforderliche Wärmemenge reduziert, die bei diffuser Sonneneinstrahlung teilweise, bei direkter Sonneneinstrahlung vollständig durch die Umgebungswärme gedeckt wird, und

b) bei Kühlbetrieb sich auf die zur Zuluftvorkühlung erforderliche Kühlleistung beschränkt, die durch den Bodenspeicher gewährleistet wird.

Die Zufuhr von Hilfsenergie zum Innenraum bzw. Gebäudeinneren beschränkt sich auf die mechanische Ventilatorarbeit und auf die teilweise Deckung des Energieleistungsbedarfs zur Zulufterwärmung. Damit wird durch die erfindungsgemäße Bauwerkshülle der Nachteil der üblichen Gebäudehüllen bzw. Bausysteme vermieden, denen Transmissionswärmeverluste eigen sind, die durch Energiezufuhr oder Energieabnahme durch ein klimatechnisches Heizsystem gedeckt werden müssen.

Eine energieverbrauchswirksame Ergänzung der vorstehend beschriebenen grundsätzlichen Ausbildung der Bauwerkshülle als integriertes Großflächen-Wärmeübertragungssystem ist die Verbesserung der Nutzung der Sonnenenergie durch Kurzzeitspeicherung in den bauwerksumschließenden Bauteilen des Großflächen-Wärmeübertragungssystems und/oder in der Wärmerückgewinnung aus der Abluft, die während der Heizperiode gesammelt abgeführt wird, wobei die wiedergewonnene Wärme zur Deckung des Lüftungswärmebedarfs des Gebäudes direkt auf sehr niedrigem Temperaturniveau herangezogen werden kann.

Eine wesentliche Steigerung des Ausnutzungsgrades der unter Winterbedingungen eingestrahlten Sonnenenergie kann in einem integrierten Großflächen-Wärmeübertragungssystem durch Einsatz eines Wärmespeicherelementes in dem Bauteil des integrierten Großflächen-Wärmeübertragungssystems erreicht werden. Fig. 7 zeigt verschiedene Ausführungsformen von Bauwerkshüllenabschnitten für ein derartiges integriertes Großflächen-Wärmeübertragungssystem, wobei die Bauwerkshüllenabschnitte entsprechend den Fig. 7a bis 7d mit verschiedenen Speicherschichten versehen sein können.

Der grundsätzliche Aufbau der Bauwerkshülle der in Fig. 7a bis 7d gezeigten Art entspricht den Fig. 2 bis 6. Demnach besteht die Bauwerkshülle — von der Innenseite her betrachtet — aus einer Absorberschicht 1 und der transparenten oder opaken Außenhülle 2, wobei die Außenhülle 2 Abstand zur Absorberschicht 1 einhält. Unter Einhaltung eines Zwischenraumes kann außerdem eine luftdurchlässige Innenverkleidung 3 vorgesehen sein, die den Abschluß der Bauwerkshülle in Richtung auf das Innere des Gebäudes bildet. Wie eingangs erwähnt, kann die luftdurchlässige Innenverkleidung zusätzlich oder anstelle der Außenhülle 2 vorgesehen sein. Nach Fig. 7a bis Fig. 7d weist die gezeigte Ausführungsform der Bauwerkshülle eine Wärmespeicherschicht 8 auf, die zwischen der Absorberschicht 1 und der Außenhülle 2 vorgesehen ist und jeweils Abstand zur Absorberschicht 1 und zur Außenhülle 2 einhält. Die Wärmespeicherschicht 8, im folgenden als Speicherschicht bezeichnet, kann die Form eines monolithischen Körpers haben oder aus einer ausgefüllten Skelettkonstruktion bestehen.

Eine Speicherschicht 8 in Form eines monolithischen Körpers ist in Fig. 7a und 7b und eine Speicherschicht 8, die eine ausgefüllte Skelettkonstruktion darstellt, ist in den Fig. 7c und 7d gezeigt.

Die in den Fig. 7a bis 7d dargestellten Bauwerkshüllen zeigen Ausführungsbeispiele mit unterschiedlichen Strömungsquerschnitten. Wie vorstehend beschrieben, ist bei den Ausführungsbeispielen nach Fig. 7a und 7b ein monolithischer Körper als Speicherschicht 8 vorgesehen. Ein Bereich 8a stellt einen Bereich mit höherer Durchlässigkeit der Speicherschicht 8 dar, während bei der Ausführungsform nach Fig. 7b mit 9 ein Strömungskanal bezeichnet ist, durch welchen eine größere Luftströmung möglich ist, als durch den Abschnitt 8a bei der Ausführungsform nach Fig. 7a. Damit läßt sich bei dem Ausführungsbeispiel nach Fig. 7a eine langsamere Entladung erreichen, während bei dem Ausführungsbeispiel nach Fig. 7b infolge der größeren Durchströmungsmöglichkeit eine raschere Entladung der Speicherschicht 8 erfolgt. Bei den Ausführungsbeispielen nach Fig. 7c und 7d ist die Speicherschicht durch eine Ausfachung einer Skelettkonstruktion gebildet, wobei in dem Ausführungsbeispiel nach Fig. 7c ähnlich der Ausführungsform nach Fig. 7b Strömungskanäle 9 in der Speicherschicht 8 vorgesehen sind, während bei der Ausführungsform nach Fig. 7d keine derartigen Strömungskanäle vorgesehen sind, infolgedessen bei dem Ausführungsbeispiel nach Fig. 7c eine raschere Entladung der Speicherschicht 8 als bei der Ausführungsform nach Fig. 7d erfolgt. Die Ausführungsbeispiele nach Fig. 7a bis 7d zeigen die verschiedenen Möglichkeiten der Konzipierung der Strömungsquerschnitte und somit das Grundprinzip, wie die Entladungsgeschwindigkeit der Speicherschicht vorbestimmt werden kann. Damit läßt sich mit den unter Bezugnahme auf Fig. 7a bis 7d beschriebenen Bauwerkshüllen eine zeitliche Verschiebung der Nutzung der intermittierend anfallenden Sonnenenergie erreichen. Dabei ist wesentlich, daß die Speicherschicht 8 zwischen der äußeren, transparenten oder semitransparenten Außenhülle 2 und der Absorberschicht 1 angeordnet ist, vorzugsweise auch in die Absorberschicht 1 integriert ist.

Bei der unter Bezugnahme auf Fig. 7d beschriebenen Ausführungsform ist die Speicherschicht 8 als Ausfachung einer Skelettkonstruktion konzipiert. Mit den Bezugszeichen 7a und 7b sind Teile der Tragkonstruktion angegeben, welche die Speicherschicht 8 und die Absorberschicht 1 in vorbestimmter Anordnung in der Bauwerkshülle und/oder in gegenseitigem Abstand bzw. in Abstand zur Außenhülle 2 halten. Das mit 7a bezeichnete Teil erfaßt die Speicherschicht 8 und hält sie gegenüber der Außenhülle 2, während das Teil 7b zwischen der Innenverkleidung 3 und der Absorberschicht 1 vorgesehen ist. Der durch die Bereiche 8a mit höherer Luftdurchlässigkeit oder durch die Kanäle 9 definierte Luftstrom ist in den Fig. 7a bis 7d mit 4 bezeichnet.

Aus vorstehenden Erläuterungen ist somit ersichtlich, daß die erfindungsgemäße Bauwerkshülle mit unterschiedlichen Strömungsquerschnitten konzipiert werden kann, was in unterschiedlichen Entladungszeiten der Absorber- und Speicherschicht 8 resultiert.

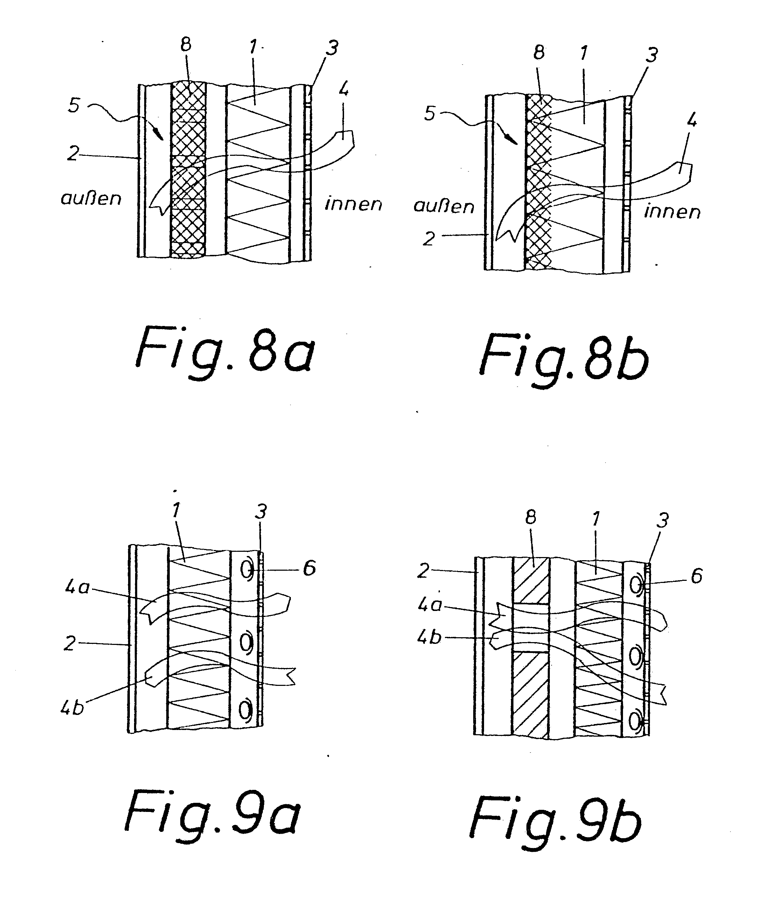

In Fig. 8a ist eine Bauwerkshülle gezeigt, bei der die Speicherschicht 8 der Absorberschicht 1 vorgesetzt ist, wobei ein Abstand zwischen der Speicherschicht 8 und der Absorberschicht 1 besteht. Nach Fig. 8b ist die Speicherschicht 8 in die Absorberschicht bzw. den Absorberkörper 1 integriert. Dadurch entfällt der Abstand zwischen der Speicherschicht 8 und der Absorberschicht 1, während jedoch die in die Absorberschicht 1 integrierte Speicherschicht Abstand zur Außenhülle 2 einhält.

Die wärmespeichernde Schicht 8 kann als sensibler oder latenter Speicher ausgebildet sein. Als sensibler Speicher können konventionelle, massive, ebenflächige Wand- oder Deckenelemente angewandt werden, die beispielsweise aus Beton, Ziegel oder dergleichen bestehen. Als latente Speicher eignen sich anorganische oder organische Substanzen, deren Phasenumwandlungstemperatur zwischen $+15°\,C$

und $+40°\,C$ liegt, beispielsweise Alkali- oder Erdalkalifluoride mit hohem Kristallwasseranteil, Paraffine usw. Diese Speicherschichten können neben ihrer Speicherfunktion in der erfindungsgemäßen Bauwerkshülle auch folgende Nebenfunktionen übernehmen: statische Funktion (als tragende Wand), brandschutztechnische Funktion (als brandhemmendes oder brandbeständiges Bauteil), akustische Funktion (schalldämmendes Element).

Die Zufuhr der zur Deckung des Lüftungswärmebedarfs während der sonnenlosen Tage erforderlichen Wärme kann bei der erfindungsgemäßen Bauwerkshülle über ein geeignetes Großflächen-Heizsystem, z. B. eine Fußbodenheizung oder eine Wandflächenheizung, erfolgen. In letzterem Fall wird ein Rohrsystem für die Flächenheizung unmittelbar mit der inneren Elementverkleidung, z. B. der luftdurchlässigen Innenverkleidung 3, verbunden. Fig. 9 zeigt eine Prinzipskizze einer Bauwerkshülle mit integrierter Wandflächenbeheizung, wobei in Fig. 9a eine Bauwerkshülle ohne Speicherschicht und in Fig. 9b eine Bauwerkshülle mit Speicherschicht 8 dargestellt ist. Fig. 9a entspricht im wesentlichen den Ausführungsformen nach Fig. 2 bis 6, während Fig. 9b den Ausführungsformen nach Fig. 7a bis 7d entspricht. Die Rohre des Flächenheizungssystems sind in Fig. 9a und 9b mit 6 bezeichnet. Außerdem sind die Strömungsrichtungen in Fig. 9a und 9b angegeben, und zwar einmal für den Heizungsfall (4a) und einmal für den Kühlungsfall (4b). Aus den Fig. 9a und 9b ist ersichtlich, daß die Strömungsrichtung im Heizungsfalle von außen nach innen geht, wie durch den Pfeil 4a gezeigt ist, während im Kühlungsfalle die Strömungsrichtung von innen nach außen gerichtet ist, wie durch den Pfeil 4b dargestellt ist.

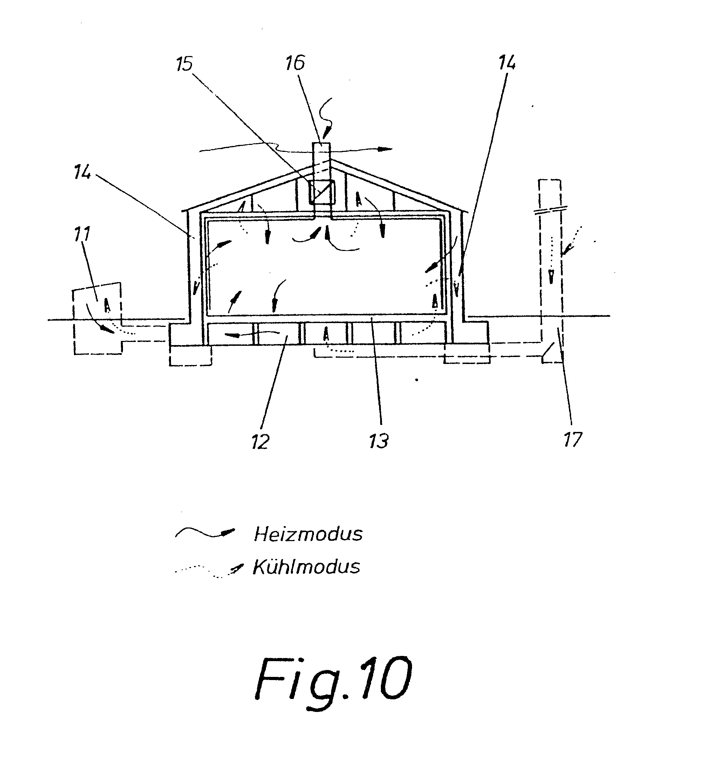

Die erfindungsgemäße Bauwerkshülle als integriertes Großflächen-Wärmeübertragungssystem ermöglicht unter Heizbedingungen die Sammlung der Abluft aus einem Raum, Raumverband oder dem gesamten Gebäude in einer gemeinsamen Abluftleitung. Dies ermöglicht eine einfache Anordnung von Wärmerückgewinnungsanlagen mit Hilfe des Wärmepumpenprinzips im Abluftstrom. Die Wiedergewinnung jener Wärme oder zumindest eines erheblichen Teiles, die zur Deckung des Lüftungswärmebedarfs aufgewandt werden muß, ist damit ohne weiteres ausführbar. Die erfindungsgemäße Bauwerkshülle in Form eines integrierten Großflächen-Wärmeübertragungssystems kann daher in Verbindung mit einer wärmepumpenbetriebenen Abluftwärme-Rückgewinnung einen weitgehend geschlossenen thermischen Heizkreislauf im zugehörigen Gebäude sicherstellen. Ein Prinzip dieses geschlossenen thermischen Heizkreises ist in Fig. 10 dargestellt. Das in Fig. 10 dargestellte Grundprinzip hat folgenden Aufbau:

Eine Bauwerkshülle 14, die nach den vorstehend beschriebenen Kriterien aufgebaut sein kann, umgibt den Innenraum eines Gebäudes. Innerhalb des Gebäudes ist ein Wärmetauscher 15 in Verbindung mit einer Wärmepumpe vorgesehen, der im Bereich eines Abluftkamins 16 angeordnet ist. Der Abluftkamin 16 kann auch mit einem Abluftventilator kombiniert sein, oder der Abluftkamin wird entsprechend hoch ausgebildet, um die erforderliche Luftströmung zu gewährleisten. Der Boden des Gebäudes, das von der Bauwerkshülle 14 umgeben ist, ist durch einen Heizestrich 13 gebildet, unterhalb welchem ein Bodenwärmetauscher 12 vorgesehen ist. Mit 11 ist ein Lüftungsschacht bezeichnet, der zur Zuführung und Ableitung von Luft in das Innere der Bauwerkshülle dient. Alternativ zum Lüftungsschacht 11 kann auch ein Luftschacht 17 vorgesehen sein, der unter Ausnutzung der natürlichen Luftbewegung beim Kühlmodus einen Windstrom sicherstellt und somit eine natürliche Lüftung sicherstellt.

In Fig. 10 ist punktiert die Luftzirkulation im Inneren der Bauwerkshülle 14 für den Kühlmodus gezeigt, während die voll ausgezogenen Pfeile die Luftzirkulation im Heizmodus wiedergeben.

Das in Fig. 10 dargestellte Prinzip ist nur als Beispiel für die Realisierung eines integrierten Großflächen-Wärmeübertragungssystems anzusehen, welches die erfindungsgemäße Bauwerkshülle ausnützt.

Die Klimatisierung des in Fig. 10 dargestellten Bauwerksinnenraumes läßt sich somit dadurch ausführen, daß Luft durch die Absorberschicht geleitet wird, wobei die Geschwindigkeit der die Absorberschicht durchströmenden Luft so eingestellt bzw. gesteuert wird, daß die von der Absorberschicht durch Wärmeübertragung und Wärmeleitung aufgenommene Wärme an die durchströmende Luft abgegeben wird. Dabei kann die Frischluft durch die Bauwerkshülle in den Bauwerksinnenraum gesaugt werden. Alternativ dazu kann die Frischluft durch den in Fig. 10 mit 12 bezeichneten Bodenwärmetauscher angesaugt und nach Kühlung in das Innere der Bauwerkshülle abgegeben werden. Die Abluft wird vorzugsweise durch die Bauwerkshülle 14 nach außen abgeleitet. Mit entsprechenden Gebläsen oder dergleichen kann in Verbindung mit der erfindungsgemäßen Bauwerkshülle erreicht werden, daß die Luft im Inneren des Bauwerks auf einem Druckwert liegt, der höher oder niedriger als der Atmosphärendruck ist.

Die bei der erfindungsgemäßen Bauwerkshülle verwendete transparente Außenhülle besteht beispielsweise aus Silikatglas oder transparenten Kunststoffelementen- oder -Folien oder aus Kombinationen letzterer. Als opake Außenhülle finden beispielsweise Beton, Ziegel, Blech, Kunststoff, d. h. übliche Baustoffe, Verwendung.

Die Schicht 1, die Absorber- und Wärmetauscher-Funktion hat, wird beispielsweise aus mineralisierten Faserstoffen, offenporigen mineralisierten Elementen, Dämmstoffen, mineralisierten faserigen Holzwerkstoffen oder Schüttungen (Kiesschüttungen mit bestimmter Korngröße in Elementarform) gebildet.

Entsprechend Fig. 8a kann die Außenschicht als opake Außenschicht, beispielsweise in Form von Kupfer, ausgebildet sein.

## Patentansprüche

1. Anordnung zur Klimatisierung eines Gebäudes, welches eine entlang der Wandung verlaufende wärmeabsorbierende Schicht und eine Außenhülle entlang der Wandung aufweist, die einen Abstand zur wärmeabsorbierenden Schicht einhält, dadurch gekennzeichnet, daß die wärmeabsorbierende Schicht (1) eine von Luft durchströmbare Schicht ist, daß die Luftströmung durch die Schicht (1) mittels eines Gebläses oder dergleichen im Kühlbetrieb von innen nach außen eingestellt ist, während die durch das Gebläse erzeugte Luftströmung durch die Schicht (1) im Heizbetrieb von außen nach innen erfolgt, und daß die Außenhülle (2) transparente oder opake Eigenschaften hat.

2. Anordnung nach Anspruch 1, dadurch gekennzeichnet, daß eine luftdurchlässige Innenverkleidung (3) vorgesehen ist.

3. Anordnung nach Anspruch 2, dadurch gekennzeichnet, daß die Innenverkleidung (3) im Abstand zur Schicht (1) angeordnet ist.

4. Anordnung nach einem der vorangehenden Ansprüche, dadurch gekennzeichnet, daß zwischen der Schicht (1) und der Außenhülle (2) eine Wärmespeicherschicht (8) vorgesehen ist.

5. Anordnung nach Anspruch 4, dadurch gekennzeichnet, daß die Wärmespeicherschicht (8) luftdurchströmte Bereiche (8a; 9) aufweist.

6. Anordnung nach Anspruch 4 oder 5, dadurch gekennzeichnet, daß die Wärmespeicherschicht (8) im Abstand zur Schicht (1) und zur Außenhülle (2) angeordnet ist.

7. Anordnung nach wenigstens einem der vorangehenden Ansprüche, dadurch gekennzeichnet, daß die Wärmespeicherschicht (8) durch einen sensiblen oder latenten Speicher gebildet ist.

8. Anordnung nach wenigstens einem der Ansprüche 1 bis 6, dadurch gekennzeichnet, daß die Wärmespeicherschicht (8) aus Beton, Ziegel oder dergleichen oder aus Alkalifluoriden, Erdalkalifluoriden mit hohem Kristallwasseranteil, Paraffinen oder dergleichen gebildet ist.

9. Anordnung nach wenigstens einem der vorangehenden Ansprüche, dadurch gekennzeichnet, daß die Schicht (1) aus mineralisierten Faserstoffen besteht.

10. Anordnung nach einem der Ansprüche 1 bis 8, dadurch gekennzeichnet, daß die Schicht (1) aus offenporigen, mineralisierten Elementen besteht.

11. Anordnung nach einem der Ansprüche 1 bis 8, dadurch gekennzeichnet, daß die Schicht (1) aus Dämmstoffen besteht.

12. Verfahren zur Klimatisierung eines Gebäudes, bestehend aus einer Anordnung nach wenigstens einem oder mehreren der vorangehenden Ansprüche, dadurch gekennzeichnet, daß Luft durch die Schicht (1) geleitet wird, daß im Heizbetrieb die Strömungsrichtung der Luft durch die Schicht von außen nach innen gerichtet wird, während im Kühlbetrieb die Strömungsrichtung der Luft von innen nach außen gerichtet wird, wobei die Strömungsrichtung der Luft durch ein Gebläse eingestellt wird.

13. Verfahren nach Anspruch 12, dadurch gekennzeichnet, daß im Heizbetrieb die Luft vor ihrer Durchströmung durch die Schicht erwärmt wird.

14. Verfahren nach Anspruch 12, dadurch gekennzeichnet, daß im Kühlbetrieb die Luft vor ihrer Durchströmung durch die Schicht gekühlt wird.

15. Verfahren nach Anspruch 14, dadurch gekennzeichnet, daß die Luft zur Kühlung durch einen Bodenwärmetauscher geleitet wird.

## Claims

1. Arrangement for the air conditioning of a building, comprising a heat absorbent layer extending along the walls and an outer casing extending along the walls and disposed at a distance from the heat absorbent layer, characterised in that the heat absorbent layer (1) is a layer through which air can flow, and in that the air flow through the layer (1) is adjusted by a blower or the like in a cooling process from the inside outwardly, while the flow of air generated by the blower passes through the layer (1) from the outside inwardly during the heating process and in that the outer casing (2) has transparent or opaque properties.

2. An arrangement according to Claim 1, characterised in that an air permeable inner cladding (3) is provided.

3. Arrangement according to Claim 2, characterised in that the inner cladding (3) is disposed at a distance from the layer (1).

4. Arrangement according to one of the preceding Claims, characterised in that a heat storage layer (8) is provided between the layer (1) and the outer casing (2).

5. Arrangement according to Claim 4, characterised in that the heat storage layer (8) has areas (8a, 9) through which air flows.

6. Arrangement according to Claim 4 or 5, characterised in that the heat storage layer (8) is disposed at a distance from the layer (1) and from the outer casing (2).

7. Arrangement according to at least one of the preceding Claims, characterised in that the heat storage layer (8) is constituted by a sensitive or latent store.

8. Arrangement according to at least one of Claims 1 to 6, characterised in that the heat storage layer (8) is constituted by concrete, brick or the like or of alkali fluorides, earth alkali fluorides with a high proportion of crystal water, paraffins or the like.

9. Arrangement according to at least one of the preceding Claims, characterised in that the layer (1) consists of mineralised fibrous materials.

10. Arrangement according to one of Claims 1 to 8, characterised in that the layer (1) consists of open-pored mineralised elements.

11. Arrangement according to one of Claims 1 to 8, characterised in that the layer (1) consists of insulating materials.

12. A method of air conditioning a building, consisting of an arrangement according to at least one or more of the preceding Claims, characterised in that air is directed through the layer (1), and in that during the heating process, the direction of air flow through the layer is from the outside inwardly, while during cooling the flow of air passes from the inside outwardly, the direction of flow of air being adjusted by a blower.

13. Method according to Claim 12, characterised in that during the heating process the air is heated prior to flowing through the layer.

14. Method according to Claim 12, characterised in that during the cooling process the air is cooled prior to flowing through the layer.

15. Method according to Claim 14, characterised in that for cooling, the air is passed through a floor heat exchanger.

## Revendications

1. Agencement pour la climatisation d'un bâtiment, qui comprend une couche absorbant la chaleur disposée le long de la paroi et une enveloppe extérieure le long de la paroi à une certaine distance de la couche absorbant la chaleur, caractérisé en ce que la couche absorbant la chaleur (1) est une couche pouvant être traversée par l'air, en ce que le courant d'air passant par la couche (1) est obtenu au moyen d'une soufflante ou analogue de l'intérieur vers l'extérieur en fonctionnement à froid alors que le courant d'air traversant la couche et (1) produit par la soufflante s'effectue de l'extérieur vers l'intérieur en fonctionnement à chaud, et en ce que l'enveloppe extérieure (2) a des propriétés transparentes ou opaques.

2. Agencement selon la revendication 1, caractérisé en ce qu'il est prévu un revêtement interne (3) laissant passer l'air.

3. Agencement selon la revendication 3, caractérisé en ce que le revêtement interne (3) est disposé à une certaine distance de la couche (1).

4. Agencement selon l'une des revendications précédentes, caractérisé en ce qu'il est prévu entre la couche (1) et l'enveloppe extérieure (2) une couche d'accumulation de la chaleur (8).

5. Agencement selon la revendication 4, caractérisé en ce que la couche d'accumulation de la chaleur (8) comprend des zones (8a, 9) traversées par l'air.

6. Agencement selon la revendication 4 ou 5, caractérisé en ce que la couche d'accumulation de la chaleur (8) est disposée à une certaine distance de la couche (1) et de l'enveloppe extérieure (2).

7. Agencement selon l'une au moins des revendications précédentes, caractérisé en ce que la couche d'accumulation de la chaleur (8) est constituée par un accumulateur sensible ou latent.

8. Agencement selon l'une au moins des revendications 1 à 6, caractérisé en ce que la couche d'accumulation de la chaleur (8) est constituée en béton, briques ou analogues, ou en fluorures alcalins, en fluorures alcalino-terreux comprenant une proportion élevée d'eau de cristallisation, en paraffines ou analogues.

9. Agencement selon l'une au moins des revendications précédentes, caractérisé en ce que la couche (1) est constituée en matériau fibreux minéralisé.

10. Agencement selon l'une des revendications 1 à 8, caractérisé en ce que la couche (1) est constituée par des éléments minéralisés à pores ouverts.

11. Agencement selon l'une des revendications 1 à 8, caractérisé en ce que la couche (1) est en constituée par des matériaux isolants.

12. Procédé de climatisation d'un bâtiment, comportant un agencement selon l'une au moins ou plusieurs des revendications précédentes, caractérisé en ce que de l'air est dirigé au travers de la couche (1), en ce qu'en fonctionnement à chaud la direction du courant de l'air au travers de la couche s'effectue de l'extérieur vers l'intérieur, alors qu'en fonctionnement à froid la direction du courant de l'air s'effectue de l'intérieur vers l'extérieur, la direction du courant de l'air étant déterminée par une soufflante.

13. Procédé selon la revendication 12, caractérisé en ce qu'en fonctionnement à chaud l'air est chauffé avant son passage au travers de la couche.

14. Procédé selon la revendication 12, caractérisé en ce qu'en fonctionnement à froid l'air est refroidi avant son passage au travers de la couche.

15. Procédé selon la revendication 14, caractérisé en ce que l'air de refroidissement est dirigé au travers d'un échangeur de chaleur de sol.

konventionelle
Bauwerkshülle

erfindungsgemäße
Bauwerkshülle

Winter

Sommer

## Fig.1

## Fig.2

außen

innen

Fig.3

außen

innen

Fig.4

außen

innen

Fig.5

**Fig.6**

**Fig.7a**

**Fig.7c**

**Fig.7b**

**Fig.7d**

Fig. 8a

Fig. 8b

Fig. 9a

Fig. 9b

Fig.10

Heizmodus
Kühlmodus